# EUROPEAN PATENT APPLICATION

(11) **EP 4 343 890 A1**
(43) Date of publication of application: **27.03.2024**
(21) Application number: 23164547.4
(22) Date of filing: 28.03.2023
(51) Int. Cl.: H01M 4/36, H01M 4/48, H01M 4/58

(54) **CATHODE ACTIVE MATERIAL FOR LITHIUM SECONDARY BATTERY AND LITHIUM SECONDARY BATTERY INCLUDING THE SAME**

(30) Priority: 26.09.2022 KR 20220121734
(71) Applicant: SK On Co., Ltd., Seoul 03161 (KR)
(72) Inventor: KANG, Min Suk, 34124 Daejeon (KR); DO, Ji Yae, 34124 Daejeon (KR); BEAK, Min Cheol, 34124 Daejeon (KR); LEE, Sang Wook, 34124 Daejeon (KR); CHO, Yong Hyun, 34124 Daejeon (KR)
(74) Representative: Prüfer & Partner mbB Patentanwälte · Rechtsanwälte

(57) **Abstract**

A cathode active material for a lithium secondary battery according to an embodiment of the present invention includes first lithium metal phosphate particles having a shape of a secondary particle formed by aggregation of primary particles and having an average particle diameter (D50) in a range from 5 µm to 10 µm, second lithium metal phosphate particles having a shape of a single particle and having an average particle diameter in a range from 1 µm to 3 µm, and third lithium metal phosphate particles having a shape of a single particle and having an average particle diameter less than 1 µm.

## Description

### BACKGROUND

### 1. Field

The present invention relates to a cathode active material for a lithium secondary battery and a lithium secondary battery including the same.

### 2. Description of the Related Art

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as an eco-friendly power source of an electric automobile, a hybrid vehicle, etc.

The secondary battery includes, e.g., a lithium secondary battery, a nickelcadmium battery, a nickel-hydrogen battery, etc. The lithium secondary battery is highlighted due to high operational voltage and energy density per unit weight, a high charging rate, a compact dimension, etc.

For example, the lithium secondary battery may include an electrode assembly including a cathode, an anode and a separation layer (separator), and an electrolyte immersing the electrode assembly. The lithium secondary battery may further include an outer case having, e.g., a pouch shape for accommodating the electrode assembly and the electrolyte.

A lithium metal phosphate may be used as a cathode active material for the lithium secondary battery.

As an application range of the lithium secondary batteries is being expanded, higher capacity and energy density and longer life-span are required. As a particle size of the lithium metal phosphate becomes greater, the energy density may be increased, but degradation of capacity and power may occur.

For example, Korean Published Patent Publication No. 10-2017-0093085 discloses a cathode active material including a transition metal compound and an ion adsorbing binder, which may not provide sufficient energy density.

### SUMMARY

According to an aspect of the present invention, there is provided a cathode active material for a lithium secondary battery having improved energy density and operational reliability.

According to an aspect of the present invention, there is provided a lithium secondary battery including a cathode active material for a lithium secondary battery with improved energy density and operational reliability.

A cathode active material for a lithium secondary battery includes first lithium metal phosphate particles having a shape of a secondary particle formed by aggregation of primary particles and having an average particle diameter (D50) in a range from 5 µm to 10 µm, second lithium metal phosphate particles having a shape of a single particle and having an average particle diameter in a range from 1 µm to 3 µm, and third lithium metal phosphate particles having a shape of a single particle and having an average particle diameter less than 1 µm.

In some embodiments, a content of the first lithium metal phosphate particles may be in a range from 50 wt% to 70 wt% based on a total weight of the first lithium metal phosphate particles, the second lithium metal phosphate particles and the third lithium metal phosphate particles.

In some embodiments, a content of the second lithium metal phosphate particles may be in a range from 20 wt% to 40 wt% based on a total weight of the first lithium metal phosphate particles, the second lithium metal phosphate particles and the third lithium metal phosphate particles.

In some embodiments, a content of the third lithium metal phosphate particles may be in a range from 10 wt% to 30 wt% based on a total weight of the first lithium metal phosphate particles, the second lithium metal phosphate particles and the third lithium metal phosphate particles.

In some embodiments, the primary particles may have an average particle diameter in a range from 10 nm to 500 nm.

In some embodiments, the first lithium metal phosphate particles further include a carbon coating formed between the primary particles or on a surface of the secondary particle.

In some embodiments, the first lithium metal phosphate particles, the second lithium metal phosphate particles and the third lithium metal phosphate particles may have an olivine structure represented by Chemical Formula 1 below.

[Chemical Formula 1] LiₐMₓP_{y}O_{4+z}

In Chemical Formula 1, 0.9≤a≤1.2, 0.99≤x≤1.01, 0.9≤y≤1.2, -0.1≤z≤0.1, and M may include at least one selected from the group consisting of Fe, Co, Ni, Mn, Ti and V.

In some embodiments, the first lithium metal phosphate particles, the second lithium metal phosphate particles and the third lithium metal phosphate particles may include LiFePO₄.

In some embodiments, the second lithium metal phosphate particles and the third lithium metal phosphate particles may include a carbon coating formed on surfaces thereof.

A lithium secondary battery includes a cathode including the cathode active material for a lithium secondary battery according to embodiments as described above, and an anode facing the cathode.

A cathode active material for a lithium secondary battery according to embodiments of the present invention includes first lithium metal phosphate particles, second lithium metal phosphate particles and third lithium metal phosphate particles having different average particle diameters (D50) from each other. Accordingly, an electrode density in a pressing process may be improved, and a cathode for a lithium secondary battery having a high energy density may be achieved.

In some embodiments, the cathode active material may be formed by mixing the first lithium metal phosphate particles, the second lithium metal phosphate particles, and the third lithium metal phosphate particles in a predetermined weight ratio. Thus, life-span and capacity properties may be improved while increasing the energy density.

### BRIEF DESCRIPTION OF THE DRAWINGS

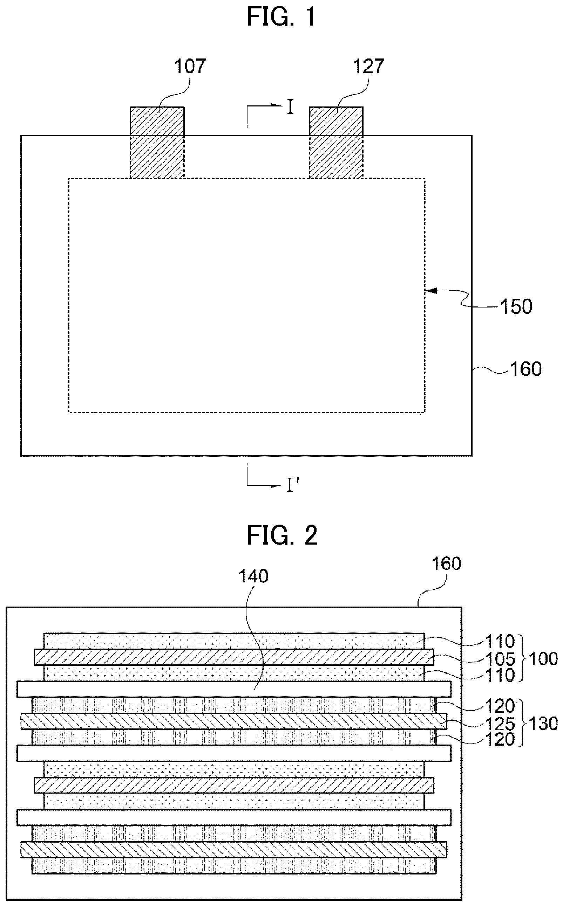

FIGS. 1 and 2 are a schematic plan view and a schematic cross-sectional view, respectively, illustrating a lithium secondary battery in accordance with exemplary embodiments.

### DETAILED DESCRIPTION OF THE EMBODIMENTS

According to embodiments of the present invention, a cathode active material including lithium metal phosphate particles and a lithium secondary battery including the same are provided.

Hereinafter, embodiments of the present invention will be described in detail with reference to exemplary embodiments and the accompanying drawings. However, those skilled in the art will appreciate that such embodiments and drawings are provided to further understand the spirit of the present invention and do not limit subject matters to be protected as disclosed in the detailed description and appended claims.

The cathode active material for a lithium secondary battery (hereinafter, that may be abbreviated as "cathode active material") includes first lithium metal phosphate particles, second lithium metal phosphate particles and third lithium metal phosphate particles having different average particle diameters (D50) from each other.

The terms "average particle diameter", "D50" and "average particle diameter (D50)" used herein may be defined as a particle diameter when a volumetric cumulative percentage corresponds to 50% in a particle size distribution obtained from a particle volume.

An average particle diameter of the first lithium metal phosphate particles is in a range from 5 µm to 10 µm, an average particle diameter of the second lithium metal phosphate particles is in a range from 1 µm to 3 µm, and an average particle diameter of the third lithium metal phosphate particles is less than 1 µm.

Within the above average particle diameter ranges, three types of particles having different particle diameters may be used together as a cathode active material to improve an electrode density during a pressing process. Accordingly, a cathode for a lithium secondary battery (hereinafter, may be abbreviated as a "cathode") having a high energy density may be implemented.

For example, the average particle diameter of the first lithium metal phosphate particles may be in a range from 6 µm to 9 µm.

For example, the average particle diameter of the second lithium metal phosphate particles may be in a range from 2 µm to 3 µm.

For example, the average particle diameter of the third lithium metal phosphate particles may be in a range from 0.1 µm to 0.8 µm.

The first lithium metal phosphate particles have a shape of a secondary particle formed by aggregation of primary particles. Accordingly, the average particle diameter of the first lithium metal phosphate particles may be increased so that the first lithium metal phosphate particles may serve as large-scaled particles in the cathode active material. Thus, the energy density of the cathode active material may be increased.

For example, as the average particle diameter becomes greater, a moving distance of lithium ions becomes larger to result in degradation of capacity and power properties. The first lithium metal phosphate particles according to exemplary embodiments may be formed by the aggregation of the primary particles having a small average particle diameter, so that the energy density may be improved while reducing the moving distance of the lithium ions. Accordingly, the energy density may be improved while suppressing deterioration of the capacity and power properties.

In some embodiments, the primary particles forming the first lithium metal phosphate particles may have an average particle diameter in a range from 10 nm to 500 nm. Within this range, the lithium ions may be easily aggregated into the secondary particles while sufficiently reducing the moving distance.

In some embodiments, the first lithium metal phosphate particle may further include a carbon coating. For example, the carbon coating may be formed on surfaces of the secondary particles, and/or between the primary particles of the first lithium metal phosphate particles. Accordingly, a cohesive force of the primary particles may be enhanced and an electrical conductivity may be increased.

In an embodiment, the carbon coating may be formed on at least a portion of the surface of the first lithium metal phosphate particle.

The second lithium metal phosphate particles and the third lithium metal phosphate particles each have a shape of a single particle. Accordingly, cracks of the cathode active material may be prevented during the pressing process, and the power properties may be improved.

The term "single particle" is used herein to exclude the shape of the secondary particle formed by aggregation of primary particles. For example, the second lithium metal phosphate particles and the third lithium metal phosphate particles may each substantially consist of particles in the form of the single particle, and the secondary particle structure in which a plurality of primary particles (e.g., more than 10, 20 or more, 30 or more, 40 or more, 50 or more, etc.) are assembled or aggregated may be excluded from the second lithium metal phosphate particles and the third lithium metal phosphate particles.

The term "the shape of the single particle" used herein does not intend to exclude, e.g., a monolithic form in which 2-10 single particles are attached or adhered to each other.

For example, the second lithium metal phosphate particles and the third lithium metal phosphate particles may have a granular single particle shape or spherical single particle shape.

For example, three types of lithium metal phosphate particles having different particle sizes may be used together, so that the energy density may be further improved compared to cases of using only a single type or two types of lithium metal phosphate particles as the cathode active material.

In some embodiments, each of the second lithium metal phosphate particle and the third lithium metal phosphate particle may further include a carbon coating formed on a surface thereof. Accordingly, the electrical conductivity may be improved, and the power properties of the cathode active material may be improved.

In some embodiments, the first lithium metal phosphate particle, the second lithium metal phosphate particle and the third lithium metal phosphate particle may have an olivine structure, and may include a chemical structure or a crystal structure represented by Chemical Formula 1 below.

[Chemical Formula 1] LiₐMₓP_{y}O_{4+z}

In Chemical Formula 1, 0.9≤a≤1.2, 0.99≤x≤1.01, 0.9≤y≤1.2, -0.1≤z≤0.1, and M may include at least one selected from the group consisting of Fe, Co, Ni, Mn, Ti and V.

The chemical structure represented by Chemical Formula 1 indicates bonding relationships included in the crystal structure of the cathode active material, and is not intended to not exclude other additional elements. For example, M may include Fe, Co, Ni and/or Mn, and Fe, Co, Ni and/or Mn may serve as a main active element of the cathode active material. Chemical Formula 1 is provided to express the bonding relationships of the main active elements, and is to be understood as a formula allowing an introduction and a substitution of an additional element.

In an embodiment, an auxiliary element may be added to the main active element to enhance chemical stability of the cathode active material or the crystal structure. The auxiliary element may be incorporated into the crystal structure to form a bond, and Chemical Formula 1 is interpreted to include this structure.

The auxiliary element may include at least one element selected from the group consisting of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Z. The auxiliary element such as Al may act as an auxiliary active element that may contribute to the capacity/power properties of the cathode active material together with Fe, Co, Ni, or Mn.

In an embodiment, the first lithium metal phosphate particle, the second lithium metal phosphate particle and the third lithium metal phosphate particle may include LiFePO₄.

In some embodiments, a content of the first lithium metal phosphate particles relative to a total weight of the cathode active material may be in a range from 50 weight percent (wt%) to 70 wt%. For example, the content of the first lithium metal phosphate particles relative to a total weight of the first lithium metal phosphate particles, the second lithium metal phosphate particles and the third lithium metal phosphate particles may be in a range from 50 wt% to 70 wt%. Within this range, the cathode active material may sufficiently include the first lithium metal phosphate particles serving as the large-scaled particles to increase the energy density while maintaining or improving durability of the cathode active material.

In some embodiments, a content of the second lithium metal phosphate particles relative to the total weight of the cathode active material may be in a range from 20 wt% to 40 wt %. For example, the content of the second lithium metal phosphate particles relative to the total weight of the first lithium metal phosphate particles, the second lithium metal phosphate particles and the third lithium metal phosphate particles may be in a range from 20 wt% to 40 wt%. Within the above range, the single particles having a medium particle diameter may be sufficiently included to prevent the reduction of the energy density while improving life-span s and power properties of the cathode active material.

In some embodiments, a content of the third lithium metal phosphate particles relative to the total weight of the cathode active material may be in a range from 10 wt% to 30 wt%. For example, the content of the third lithium metal phosphate particles relative to the total weight of the first lithium metal phosphate particles, the second lithium metal phosphate particles and the third lithium metal phosphate particles may be in a range from 10 wt% to 30 wt%. Within this range, the single particles of a smallscaled diameter may be sufficiently included so that the reduction of the energy density may be prevented while improving the electrode density and power properties.

For example, in a formation of the lithium metal phosphate, a lithium source (e.g., lithium carbonate), an iron phosphate and a carbon source (e.g., glucose) may be added to distilled water, and a ball mill may be used to pulverize the particles to a target size while mixing.

Distilled water may be evaporated by drying (e.g., a spray drying) the mixed solution containing the pulverized particles. In the drying, drying conditions and a nozzle may be changed to achieve various forms of secondary particles or primary particles of the lithium metal phosphate.

The particles after the drying may be heat-treated at a temperature raging from about 300 °C to 1000 °C for about 3 to 10 hours under a nitrogen atmosphere, and then classification and de-ironing processes may be performed to from the lithium meal phosphate.

FIGS. 1 and 2 are a schematic plan view and a schematic cross-sectional view, respectively, illustrating a lithium secondary battery in accordance with exemplary embodiments. For example, FIG. 2 is a cross-sectional view taken along a line I-I' in a thickness.

Referring to FIGS. 1 and 2, the lithium secondary battery may include a cathode 100 including the cathode active material including the above-described first to third lithium metal phosphate particles and an anode 130 facing the cathode.

The cathode 100 may include a cathode active material layer 110 formed by coating the cathode active material including the above-described first to third lithium metal phosphate particles on a cathode current collector 105.

For example, the cathode active material may be mixed and stirred in solvent with a binder, a conductive material, and/or a dispersive agent to form a cathode slurry. The cathode slurry may be coated on the cathode current collector 105, and then dried and pressed to form the cathode 100.

The cathode current collector 105 may include stainless steel, nickel, aluminum, titanium or an alloy thereof. The cathode current collector 105 may include aluminum or stainless steel surface-treated with carbon, nickel, titanium or silver.

The binder may include an organic based binder such as a polyvinylidene fluoride-hexafluoropropylene copolymer (PVDF-co-HFP), polyvinylidenefluoride (PVDF), polyacrylonitrile, polymethylmethacrylate, etc., or an aqueous based binder such as styrene-butadiene rubber (SBR) that may be used with a thickener such as carboxymethyl cellulose (CMC).

For example, a PVDF-based binder may be used as a cathode binder. In this case, an amount of the binder for forming the cathode active material layer 110 may be reduced, and an amount of the cathode active material may be relatively increased. Thus, capacity and power of the lithium secondary battery may be further improved.

The conductive material may be added to facilitate electron mobility between active material particles. For example, the conductive material may include a carbon-based material such as graphite, carbon black, graphene, carbon nanotube, etc., and/or a metal-based material such as tin, tin oxide, titanium oxide, a perovskite material such as LaSrCoO₃ or LaSrMnO₃, etc.

The anode 130 may include an anode current collector 125 and an anode active material layer 120 formed by coating an anode active material on at least one surface of the anode current collector 125.

The anode active material may include a material capable of adsorbing and ejecting lithium ions. For example, a carbon-based material such as a crystalline carbon, an amorphous carbon, a carbon complex or a carbon fiber, a lithium alloy, silicon or tin may be used as the anode active material.

The amorphous carbon may include a hard carbon, cokes, a mesocarbon microbead (MCMB) fired at a temperature of 1500 °C or less, a mesophase pitch-based carbon fiber (MPCF), etc. The crystalline carbon may include a graphite-based material such as natural graphite, graphitized cokes, graphitized MCMB, graphitized MPCF, etc. The lithium alloy may further include aluminum, zinc, bismuth, cadmium, antimony, silicon, lead, tin, gallium, indium, etc.

The anode current collector 125 may include, e.g., gold, stainless steel, nickel, aluminum, titanium, copper, or an alloy thereof, and preferably may include copper or a copper alloy.

In some embodiments, a slurry may be prepared by mixing and stirring the anode active material with a binder, a conductive material and/or a dispersive agent in a solvent. The slurry may be coated on the anode current collector, and then dried and pressed to form the anode 130.

The binder and the conductive material substantially the same as or similar to those used for the cathode active material layer 110 may be used in the anode 130. In some embodiments, the binder for forming the anode 130 may include an aqueous binder such as styrene-butadiene rubber (SBR) for a compatibility with, e.g., the carbon-based active material, and carboxymethyl cellulose (CMC) may also be used as a thickener.

A separation layer 140 may be interposed between the cathode 100 and the anode 130. The separation layer 140 may include a porous polymer film prepared from, e.g., a polyolefin-based polymer such as an ethylene homopolymer, a propylene homopolymer, an ethylene/butene copolymer, an ethylene/hexene copolymer, an ethylene/methacrylate copolymer, or the like. The separation layer 140 may also include a non-woven fabric formed from a glass fiber with a high melting point, a polyethylene terephthalate fiber, or the like.

In exemplary embodiments, an electrode cell may be defined by the cathode 100, the anode 130 and the separation layer 140, and a plurality of the electrode cells may be stacked to form an electrode assembly 150 that may have e.g., a jelly roll shape. For example, the electrode assembly 150 may be formed by winding, laminating or folding of the separation layer 140.

The electrode assembly 150 may be accommodated together with an electrolyte in a case 160 to define the lithium secondary battery. In exemplary embodiments, a non-aqueous electrolyte may be used as the electrolyte.

The non-aqueous electrolyte may include a lithium salt and an organic solvent. The lithium salt may be represented by Li⁺X⁻ , and an anion of the lithium salt X⁻ may include, e.g., F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, etc.

The organic solvent may include, e.g., propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxy ethane, diethoxy ethane, vinylene carbonate, sulfolane, gammabutyrolactone, propylene sulfite, tetrahydrofuran, etc. These may be used alone or in a combination of two or more therefrom.

As illustrated in FIG. 1, electrode tabs (a cathode tab and an anode tab) may protrude from the cathode current collector 105 and the anode current collector 125 included in each electrode cell to one side of the case 160. The electrode tabs may be welded together with the one side of the case 160 to be connected to an electrode lead (a cathode lead 107 and an anode lead 127) that may be extended or exposed to an outside of the outer case 160.

The lithium secondary battery may be manufactured in, e.g., a cylindrical shape using a can, a square shape, a pouch shape or a coin shape.

According to exemplary embodiments, the cathode active material having improved chemical stability by doping or coating of the molybdenum-containing compound may be used so that the lithium secondary battery having improved life-span and long-term stability while suppressing a reduction of a capacity and an average voltage.

Hereinafter, preferred embodiments are proposed to more concretely describe the present invention. However, the following examples are only given for illustrating the present invention and those skilled in the related art will obviously understand that various alterations and modifications are possible within the scope and spirit of the present invention. Such alterations and modifications are duly included in the appended claims.

### Example 1

### Preparation of cathode active material

LiFePO₄ having a primary particle shape and an average particle diameter of 300 nm was prepared. Specifically, lithium carbonate as a lithium source, iron phosphate and glucose as a carbon coating source were put in distilled water and mixed through a ball mill to pulverize particles to have an average particle diameter of about 300 nm to form LiFePO₄ having the primary particle shape.

A mixed solution containing LiFePO₄ having the primary particle shape was dried using a spray dryer having a micro-nozzle shape to form first lithium metal phosphate particles having a secondary particle shape in which the primary particles were aggregated. An average particle diameter of the first lithium metal phosphate particles measured through a particle size distribution device was 7 µm.

LiFePO₄ having an average particle diameter of 2 µm and a single particle shape was prepared and used as the second lithium metal phosphate particles.

LiFePO₄ having an average particle diameter of 0.5 µm and a single particle shape was prepared and used as a third lithium metal phosphate particle.

A cathode active material was prepared by mixing the prepared first lithium metal phosphate particles, the second lithium metal phosphate particles and the third lithium metal phosphate particles by weight ratio of 60:25:15.

The average particle diameters of the first lithium metal phosphate particles, the second lithium metal phosphate particles and the third lithium metal phosphate particles were measured through a particle size analyzer (Mastersizer 3000, Malvern Panalytical).

### Fabrication of lithium secondary battery

A lithium secondary battery was fabricated using the prepared cathode active material. Specifically, a cathode slurry was prepared by mixing the cathode active material, Denka Black as a conductive material and PVDF as a binder in a mass ratio of 93:5:2, respectively. The cathode slurry was coated on an aluminum current collector, followed by drying and pressing to obtain the cathode. A target electrode density of the cathode after the pressing was adjusted to 2.45 g/cc.

A lithium metal was used as an anode active material.

The cathode and the anode prepared as described above were notched and laminated in a circular shape having diameters of Φ14 and Φ16, respectively, and a separator (polyethylene, thickness 13 µm) notched with Φ19 was interposed between the cathode and the anode to form an electrode cell. The electrode cell was placed in a coin cell exterior material having a diameter of 20 mm and a height of 1.6 mm, and an electrolyte was injected and assembled, followed by aging for 12 hours or more so that the electrolyte could impregnate the electrode to prepare a lithium secondary battery.

A 1M LiPF6 solution using a mixed solvent of ethylene carbonate (EC)/ethyl methyl carbonate (EMC) (30/70; volume ratio) was used as the electrolyte.

Formation charging and discharging was performed on the lithium secondary battery prepared as described above (charging condition CC-CV 0.1C 4.3V 0.005C CUT-OFF, discharging condition CC 0.1C 3V CUT-OFF).

### Examples 2 to 9

A cathode active material and a lithium secondary battery by the same method as that in Example 1, except that the first lithium metal phosphate particles, the second lithium metal phosphate particles and the third lithium metal phosphate particles were mixed by weigh ratios as shown in Table 1.

### Example 10

A cathode active material and a lithium secondary battery by the same method as that in Example 1, except that glucose was not added when forming the first lithium metal phosphate particles.

### Comparative Examples 1 to 4

A cathode active material and a lithium secondary battery by the same method as that in Example 1, except that the first lithium metal phosphate particles, the second lithium metal phosphate particles and the third lithium metal phosphate particles were mixed by weigh ratios as shown in Table 1.

### Experimental Example

### (1) Evaluation on pressed density

The cathode active materials prepared according to the above-described Examples and Comparative Examples were pressed by applying a force of 8 ton, and then a pressed density of each cathode active material was measured.

Specifically, 2.00 g of the prepared cathode active material particles were put into an empty pelletizer of a pellet pressing device (Carver 4350), and a pressure was gradually increased until the clamping force reached 8 ton. After the clamping force reached 8 ton, a height was measured at 10 seconds after the pressure reached 8 ton, a height of the pelletizer without the cathode active material particles was corrected, and the pressed density was measured by converting an internal volume of the pelletizer.

### (2) Evaluation on capacity retention

The lithium secondary battery fabricated according to each of Examples and Comparative Examples was placed into a chamber at 45 °C, and charging (CC/CV 1.0C 4.3V 0.05C CUT-OFF) and discharging (CC 1.0C 3.0V CUT-OFF) 50 times. A capacity retention was evaluated as a percentage of a discharge capacity at the 50th cycle relative to a discharge capacity at the first cycle.

### (3) Evaluation on low temperature capacity property

The lithium secondary battery fabricated according to each of Examples and Comparative Examples was placed in a -10 °C chamber and left for 12 hours, and then a low-temperature discharge capacity was measured.

The lithium secondary battery was left at room temperature (25 °C) for 12 hours, and then a room temperature discharge capacity was measured.

The measured low-temperature discharge capacity was divided by the roomtemperature discharge capacity and calculated as a percentage.

The weight ratios of the first to third lithium metal phosphate particles, and the evaluation results of Examples and Comparative Examples are shown in Table 1 below.

**[Table 1]**

| No. | weight ratios of first to third lithium metal phosphate particles | pressed density (g/cc) | capacity retention (%) | low temperature capacity property (%) |
|---|---|---|---|---|
| Example 1 | 60:25:15 | 2.59 | 96 | 81 |
| Example 2 | 70:20:10 | 2.61 | 95 | 79 |
| Example 3 | 50:40:10 | 2.55 | 95 | 77 |
| Example 4 | 50:30:20 | 2.54 | 93 | 78 |
| Example 5 | 30:50:20 | 2.42 | 85 | 71 |
| Example 6 | 30:40:30 | 2.40 | 84 | 71 |
| Example 7 | 75:20:5 | 2.63 | 87 | 73 |
| Example 8 | 60:15:25 | 2.55 | 85 | 70 |
| Example 9 | 45:20:35 | 2.45 | 86 | 72 |
| Example 10 | 60:25:15 | 2.59 | 94 | 74 |
| Comparative Example 1 | 0:70:30 | 2.35 | 78 | 65 |
| Comparative Example 2 | 0:100:0 | 2.28 | 73 | 61 |
| Comparative Example 3 | 100:0:0 | 2.56 | 61 | 55 |
| Comparative Example 4 | 70:0:30 | 2.55 | 70 | 67 |

Referring to Table 1, in Examples including the cathode active material including three types of particles having different particle sizes, the improved rolling density, capacity retention and low temperature capacity property were obtained compared to those from Comparative Examples where the cathode includes the cathode active materials of one or two types of particles.

In Examples 5, 6 and 9 where the content of the first lithium metal phosphate particles was less than 50 wt% based on the weight of the cathode active material, the rolling density, capacity retention and low-temperature capacity property were lowered relatively to those from other Examples.

In Example 7 where the content of the first lithium metal phosphate particles exceeded 70 wt% based on the weight of the cathode active material, cracks in the cathode active material were formed and thus the capacity retention was lowered compared to other Examples. Further, in Example 7 where the content of the third lithium metal phosphate particles was reduced to less than 10 wt% based on the weight of the cathode active material, the capacity retention and the low-temperature capacity property were lowered compared to other Examples.

In Example 8, the content of the second lithium metal phosphate particles was less than 20 wt% based on the weight of the cathode active material, and the capacity retention and the low-temperature capacity property were lowered compared to other Examples.

In Example 9 where the content of the third lithium metal phosphate particles exceeded 30 wt% based on the weight of the cathode active material, the pressed density and capacity retention were lowered compared to other Examples.

In Example 10, the carbon coating was not included, and the low-temperature capacity property was lowered compared to Example 1 having the same composition.

## Claims

1. A cathode active material for a lithium secondary battery, comprising:
first lithium metal phosphate particles having a shape of a secondary particle formed by aggregation of primary particles, the first lithium metal phosphate particles having an average particle diameter (D50) in a range from 5 µm to 10 µm;
second lithium metal phosphate particles having a shape of a single particle and having an average particle diameter (D50) in a range from 1 µm to 3 µm; and
third lithium metal phosphate particles having a shape of a single particle and having an average particle diameter (D50) less than 1 µm.

2. The cathode active material for a lithium secondary battery according to claim 1, wherein a content of the first lithium metal phosphate particles is in a range from 50 wt% to 70 wt% based on a total weight of the first lithium metal phosphate particles, the second lithium metal phosphate particles and the third lithium metal phosphate particles.

3. The cathode active material for a lithium secondary battery according to claim 1 or claim 2, wherein a content of the second lithium metal phosphate particles is in a range from 20 wt% to 40 wt% based on a total weight of the first lithium metal phosphate particles, the second lithium metal phosphate particles and the third lithium metal phosphate particles.

4. The cathode active material for a lithium secondary battery according to any one of claims 1 to 3, wherein a content of the third lithium metal phosphate particles is in a range from 10 wt% to 30 wt% based on a total weight of the first lithium metal phosphate particles, the second lithium metal phosphate particles and the third lithium metal phosphate particles.

5. The cathode active material for a lithium secondary battery according to any one of claims 1 to 4, wherein the primary particles have an average particle diameter in a range from 10 nm to 500 nm.

6. The cathode active material for a lithium secondary battery according to any one of claims 1 to 5, wherein the first lithium metal phosphate particles further comprise a carbon coating formed between the primary particles or on a surface of the secondary particle.

7. The cathode active material for a lithium secondary battery according to any one of claims 1 to 6, wherein the first lithium metal phosphate particles, the second lithium metal phosphate particles and the third lithium metal phosphate particles have an olivine structure represented by Chemical Formula 1 below:
[Chemical Formula 1] LiₐMₓP_{y}O_{4+z}
wherein, in Chemical Formula 1, 0.9≤a≤1.2, 0.99≤x≤1.01, 0.9≤y≤1.2, - 0.1≤z≤0.1, and M includes at least one selected from the group consisting of Fe, Co, Ni, Mn, Ti and V.

8. The cathode active material for a lithium secondary battery according to claim 7, wherein the first lithium metal phosphate particles, the second lithium metal phosphate particles and the third lithium metal phosphate particles include LiFePO₄.

9. The cathode active material for a lithium secondary battery according to any one of claims 1 to 8, wherein the second lithium metal phosphate particles and the third lithium metal phosphate particles comprise a carbon coating formed on surfaces thereof.

10. A lithium secondary battery, comprising:
a cathode comprising the cathode active material for a lithium secondary battery of any one of claims 1 to 9; and
an anode facing the cathode.
